# EUROPEAN PATENT APPLICATION

(11) **EP 3 564 302 A1**
(43) Date of publication of application: **06.11.2019**
(21) Application number: 17889002.6
(22) Date of filing: 21.12.2017
(51) Int. Cl.: C08L 23/00, B29C 43/14, C08K 3/04, H01M 8/0213, H01M 8/0221, H01M 8/18, B29K 23/00, B29L 7/00

(54) **THERMOPLASTIC RESIN COMPOSITION, MOLDED BODY, FUEL CELL SEPARATOR, BIPOLAR PLATE FOR REDOX FLOW CELL, AND METHOD FOR PRODUCING MOLDED BODY**

(30) Priority: 27.12.2016 JP 2016252946
(71) Applicant: Showa Denko K.K., Tokyo 105-8518 (JP)
(72) Inventor: YOKOYAMA Yoshihito, Tokyo 105-8518 (JP); NOGUCHI Masayuki, Tokyo 105-8518 (JP); IINO Tadashi, Tokyo 105-8518 (JP)
(74) Representative: Strehl Schübel-Hopf & Partner
(86) International application number: PCT/JP2017/045931
(87) International publication number: WO 2018/123807

(57) **Abstract**

A thermoplastic resin composition which includes 50% to 90% by mass of a powder material (A) and 50% to 10% by mass of a α-olefin-based thermoplastic resin (B), wherein the α-olefin-based thermoplastic resin (B) includes a first α-olefin-based thermoplastic resin (B1) having an isotactic pentad fraction [mmmm] of 70% to 99% and a melting point in the range of 120°C to 168°C, and a second α-olefin-based thermoplastic resin (B2) having an isotactic pentad fraction [mmmm] of 30% to 60% and a melting point in the range of 60°C to 100°C, and the mass ratio ((B2)/(B1)) of the second α-olefin-based thermoplastic resin (B2) relative to the first α-olefin-based thermoplastic resin (B1) is 0.3 to 2.0.

## Description

### Technical Field

The present invention relates to a thermoplastic resin composition, a molded body, a separator for a fuel cell, a bipolar plate for a redox flow cell, and a method for producing a molded body.

Priority is claimed on Japanese Patent Application No. 2016-252946, filed on December 27, 2016, the content of which is incorporated herein by reference.

### Background Art

In recent years, the development of a composite material member containing an organic and/or inorganic powder material and a polymer material has advanced. The composite material member has both the function obtained by the powder material and the molding processability obtained by the polymer material. As an example of the composite material member, there is a molded body of a conductive resin composition in which a carbonaceous material is contained in a resin. The molded body of the conductive resin composition is used as a member in redox flow cells and fuel cells.

A redox flow cell is a device that is charged and discharged by an oxidation-reduction reaction between polyvalent ions on the negative electrode side and polyvalent ions on the positive electrode sider, wherein the electrodes are separated by an ion exchange membrane in the cell. In a case where an electrolytic solution is used as a carrier, polyvalent ions are transported into a cell by allowing the electrolytic solution to flow from a tank to the cell by a pump. In a redox flow cell, it is possible to increase the battery capacity by increasing the carrier capacity. Therefore, a redox flow cell is suitable for the enlargement of size. In addition, a redox flow cell can be charged and discharged at room temperature and it is not necessary to use flammable and explosive substances as a material. Thus, a redox flow cell has excellent safety. Further, by using a specific polyvalent ionic species, it is possible to obtain a redox flow cell having high stability in which the composition is not easily changed since a chemical reaction is not involved.

On the other hand, a redox flow cell has a defect of a low energy density. In order to compensate this defect, a bipolar plate in which a flow path through which a carrier flows is formed is used. By using such a bipolar plate, a carrier including a polyvalent ionic species can be allowed to flow efficiently with a low-pressure loss and an oxidation-reduction reaction of the polyvalent ionic species can be more efficiently carried out.

A fuel cell is a device for generating electric power using hydrogen and oxygen by a reverse reaction of electrolysis of water. A fuel cell is a clean-power-generating device that doesn't generate waste other than water. Fuel cells are classified into several kinds depending upon the kind of electrolyte used. Among fuel cells which can be utilized in automobile and consumer use, the most promising cell is a polymer electrolyte (membrane) fuel cell, since the fuel cell operates at a low temperature. A polymer electrolyte (membrane) fuel cell is fabricated by stacking a plurality of single cells each including a fuel electrode that has a catalyst, a solid polymer electrolyte, and an air electrode with a separator interposed therebetween, whereby high output power generation can be achieved.

In the fuel cell having the above configuration, on the separator for partitioning the single cells, flow paths (grooves) for supplying fuel gas (hydrogen or the like) and oxidizing gas (oxygen or the like) and for discharging generated water (water vapor) are formed. The separator is required to have high gas impermeability capable of completely separating the fuel gas and the oxidizing gas, high conductivity capable of decreasing internal resistance, and sufficient thermal conductivity, durability, and strength.

Fuel cells for use in automobile applications and electric power supply adjustment applications for power plants are anticipated in the future, and there is a demand for fuel cells that can be charged and discharged with higher output. Therefore, further improvement of the conductivity and dimensional accuracy of a separator is required.

As a bipolar plate for a redox flow cell and a separator for a fuel cell, a molded body of a conductive resin composition can be used.

For example, Patent Document 1 discloses a separator for a fuel cell which includes a flow path portion having a gas flow path formed in one surface or both surfaces, and an outer peripheral portion formed so as to surround the flow path portion, and is formed of a resin composition including a boron-containing carbonaceous material and a thermoplastic resin.

Patent Document 2 discloses a separator for a fuel cell to be laminated on an electrode assembly by compression-molding a conductive resin composition into a thin plate, which is produced by preparing the conductive resin composition comprising a thermoplastic resin and a carbon-based conductive material, providing a reinforcement material smaller than the thin plate in size in the thin plate, and forming channels for fluid on both surfaces by making a plurality of recesses on each surface.

Patent Document 3 discloses a resin composition including a powder mixture containing a carbon nanotube and an olefin polymer having specific physical properties. In addition, Patent Document 3 discloses a molded body formed of the resin composition including the powder mixture, a bipolar plate for a redox flow cell, and a separator for a fuel cell.

### Citation List

### Patent Literature

Patent Document 1: Japanese Unexamined Patent Application, First Publication No. 2013-093334
Patent Document 2: Japanese Unexamined Patent Application, First Publication No. 2014-022096
Patent Document 3: Japanese Unexamined Patent Application, First Publication No. 2016-041806

### Summary of Invention

### Technical Problem

However, thermoplastic resin compositions in the related art containing a sufficient amount of powder material exhibit insufficient molding processability. Therefore, in the related art, in order to produce a molded body having desired dimensional accuracy using a thermoplastic resin composition containing a sufficient amount of powder material, it is necessary to increase the compression molding temperature to secure molding processability. However, as the compression molding temperature is raised, more time and effort are required for heating and cooling accompanying the compression molding, and molding cycle properties are deteriorated. Therefore, in the thermoplastic resin composition containing a sufficient amount of powder material, it is required to improve molding processability.

In addition, as a method for improving the molding processability of a thermoplastic resin composition including a powder material, a method which uses the decreased content of the powder material in the thermoplastic resin composition is considered. However, in a case where the content of the powder material is decreased, a function exhibited by including the powder material is not sufficiently obtained.

Specifically, for example, a molded body having a flow path used as a bipolar plate for a redox flow cell or a molded body having a flow path used as a separator for a fuel cell is required to have good conductivity. Accordingly, the thermoplastic resin composition used as a material of a molded body for the above application has to contain a sufficient amount of powder material having conductivity. However, in a case where the content of the powder material in the thermoplastic resin composition is sufficiently increased and molding is carried out at a low compression molding temperature, the molding processability becomes insufficient and the dimensional accuracy of the flow path becomes insufficient.

The present invention has been made under the above circumstances and an object thereof is to provide a thermoplastic resin composition containing a sufficient amount of powder material and capable of obtaining good molding processability.

In addition, another object of the present invention is to provide a molded body of the thermoplastic resin composition of the present invention, a separator for a fuel cell, and a bipolar plate for a redox flow cell.

Further, another object of the present invention is to provide a method for producing a molded body capable of efficiently forming a molded body using the thermoplastic resin composition of the present invention.

### Solution to Problem

The present inventors have conducted intensive investigations to achieve the above objects.

As a result, the present inventors have found that a thermoplastic resin composition including 50% by mass or more of a powder material, and two kinds of olefin-based thermoplastic resins having specific physical properties at a specific ratio is preferable and have thus completed the present invention.

That is, the present invention relates to the following.
[1] A thermoplastic resin composition, including:
   50% to 90% by mass of a powder material (A); and 50% to 10% by mass of a α-olefin-based thermoplastic resin (B),
   in which the α-olefin-based thermoplastic resin (B) includes a first α-olefin-based thermoplastic resin (B1) having an isotactic pentad fraction [mmmm] of 70% to 99% and a melting point in a range of 120°C to 168°C, and a second α-olefin-based thermoplastic resin (B2) having an isotactic pentad fraction [mmmm] of 30% to 60% and a melting point in a range of 60°C to 100°C, and
   a mass ratio ((B2)/(B1)) of the second α-olefin-based thermoplastic resin (B2) relative to the first α-olefin-based thermoplastic resin (B1) is 0.3 to 2.0.
[2] The thermoplastic resin composition according to [1], in which the powder material (A) is at least one carbonaceous material selected from carbon black, carbon fiber, amorphous carbon, expanded graphite, artificial graphite, natural graphite, kish graphite, vapor grown carbon fiber, carbon nanotube, and fullerene.
[3] The thermoplastic resin composition according to [1] or [2], in which each of the first α-olefin-based thermoplastic resin (B1) and the second α-olefin-based thermoplastic resin (B2) is an α-olefin-based thermoplastic resin formed by polymerizing one or more monomers selected from α-olefins having 3 to 6 carbon atoms.
[4] The thermoplastic resin composition according to [3], in which each of the first α-olefin-based thermoplastic resin (B1) and the second α-olefin-based thermoplastic resin (B2) includes a monomer unit derived from propylene.
[5] A molded body, which is formed of
   the thermoplastic resin composition according to any one of [1] to [4].
[6] A bipolar plate for a redox flow cell which is a molded body of the thermoplastic resin composition according to any one of [2] to [4].
[7] A separator for a fuel cell which is a molded body of the thermoplastic resin composition according to any one of [2] to [4].
[8] A method for producing a molded body, including:
   a step of supplying the thermoplastic resin composition according to any one of [1] to [4] into a mold and performing heating and compression molding at a compression molding temperature which is 10°C to 20°C higher than the melting point of the first α-olefin-based thermoplastic resin (B1); and
   a step of subjecting the mold to compression cooling to a temperature lower than 50°C.

### Advantageous Effects of Invention

The thermoplastic resin composition according to the present invention contains a sufficient amount of powder material, and good molding processability can be obtained. Therefore, by molding this composition, a molded body having a sufficient function obtained by including the powder material and having desired dimensional accuracy can be obtained.

The bipolar plate for a redox flow cell and the separator for a fuel cell according to the present invention are molded bodies obtained by using the thermoplastic resin composition including a carbonaceous material as a powder material. Therefore, good conductivity is obtained, the weight is lighter than in a case of using a metal material, and further, desired dimensional accuracy is easily obtained. Thus, molding can be efficiently carried out.

In the method for producing a molded body according to the present invention, since a molded body of the thermoplastic resin composition according to the present invention is produced, even in a case where the compression molding temperature is set to a temperature 10°C to 20°C higher than the melting point of the first α-olefin-based thermoplastic resin (B1), good molding processability can be obtained, and a molded body can be efficiently formed.

### Description of Embodiments

Hereinafter, preferable examples of a thermoplastic resin composition, a molded body, a separator for a fuel cell, a bipolar plate for a redox flow cell, and a method for producing a molded body according to the present invention will be described more specifically. The present invention is not limited only to embodiments and examples described below. Additions, omissions, replacements, and other changes of constituents can be made within a range not departing from the spirit of the present invention.

### <Thermoplastic Resin Composition>

A thermoplastic resin composition according to an embodiment includes a powder material (A) and a α-olefin-based thermoplastic resin (B).

### [Powder Material (A)]

The powder material included in the thermoplastic resin composition of the embodiment is not limited at all. The shape of the powder material can be determined according to the application of the thermoplastic resin composition and is not particularly limited. For example, a spherical powder material having a volume-average particle diameter (D50) of 20 µm to 50 µm can be used. In this embodiment, in a case where the length is 10 mm or less, a fibrous material can also be used as the powder material.

The material of the powder material can be determined according to the application of the thermoplastic resin composition and is not particularly limited. For example, as the material of the powder material, an inorganic material such as a metal may be used or an organic material may be used. Specific examples of the material of the powder material include inorganic materials such as metals wherein examples thereof include titanium, aluminum and nickel, natural minerals, metal oxides, glasses, and carbonaceous materials. In addition, as the material of the powder material, organic materials such as wood, organic fiber, rubber such as that of a tire, and the like can be used.

In a case where the thermoplastic resin composition is used in the energy field and the electronics field, in many applications, it is preferable to use a carbonaceous material as the powder material. Therefore, it is preferable to use a carbonaceous material as the powder material in the thermoplastic resin composition of the embodiment.

For example, as the carbonaceous material used as the material of the powder material, at least one selected from carbon black, carbon fiber, amorphous carbon, expanded graphite, artificial graphite, natural graphite, kish graphite, vapor grown carbon fiber, carbon nanotube, and fullerene may be used. Among these carbonaceous materials, it is preferable to use one or more materials selected from natural graphite, artificial graphite, and expanded graphite. Particularly, in order to obtain a molded body of a thermoplastic resin composition having no anisotropy, it is preferable to use artificial graphite having a low aspect ratio.

### [α-Olefin-Based Thermoplastic Resin (B)]

The α-olefin-based thermoplastic resin (B) included in the thermoplastic resin composition of the embodiment includes a first α-olefin-based thermoplastic resin (B1) having an isotactic pentad fraction [mmmm] of 70% to 99% and a melting point in a range of 120°C to 168°C (hereinafter, sometimes abbreviated as "first α-olefin-based resin (B1)"), and a second α-olefin-based thermoplastic resin (B2) having an isotactic pentad fraction [mmmm] of 30% to 60% and a melting point in a range of 60°C to 100°C (hereinafter, sometimes abbreviated as "second α-olefin-based resin (B2)").

### [First α-Olefin-Based Thermoplastic Resin (B1)]

As the first α-olefin-based resin (B1), an α-olefin-based resin having an isotactic pentad fraction [mmmm] of 70% to 99%, whose stereoregularity is measured by nuclear magnetic resonance spectroscopy (NMR), is used. The isotactic pentad fraction [mmmm] of the first α-olefin-based resin (B1) is more preferably 80% to 99% and is even more preferably 90% to 99%. In a case where the isotactic pentad fraction [mmmm] of the first α-olefin-based resin (B1) is less than 70%, there is a possibility that the durability of a molded body of the thermoplastic resin composition may be deteriorated.

A melting point Tm_{B1} of the first α-olefin-based resin (B1) is 120°C to 168°C and preferably 140°C to 165°C. In a case where the melting point Tm_{B1} of the first α-olefin-based resin (B1) is lower than 120°C, there is a possibility that the durability of a molded body of the thermoplastic resin composition may be deteriorated. In addition, in a case where the melting point Tm_{B1} of the first α-olefin-based resin (B1) is 168°C or lower, the molding temperature becomes sufficiently low and thus molding can be efficiently carried out.

As the first α-olefin-based resin (B1), a known α-olefin having an isotactic pentad fraction [mmmm] in the above range and a melting point Tm_{B1} in the above range can be used. An α-olefin-based thermoplastic resin obtained by polymerizing one or more monomers selected from α-olefins having 3 to 5 carbon atoms is preferably used.

Examples of the α-olefins having 3 to 5 carbon atoms include propylene, 1-butene, and 1-pentene. Among these, an α-olefin having 3 or 4 carbon atoms (propylene or 1-butene) is preferable and an α-olefin having 3 carbon atoms (propylene) is more preferable.

As the first α-olefin-based resin (B1), among these monomers, an α-olefin-based homopolymer obtained by polymerizing one monomer alone may be used and an α-olefin-based copolymer obtained by copolymerizing two or more monomers in combination may be used. In addition, an α-olefin-based copolymer including a monomer unit derived from ethylene, which is obtained by using ethylene as a part of the monomer, may be used.

For the first α-olefin-based resin (B1), it is preferable to contain a monomer unit derived from propylene.

### [Second α-Olefin-Based Thermoplastic Resin (B2)]

As the second α-olefin-based resin (B2), an α-olefin-based resin having an isotactic pentad fraction [mmmm] of 30% to 60%, whose stereoregularity is measured by nuclear magnetic resonance spectroscopy (NMR), is used. The isotactic pentad fraction [mmmm] of the second α-olefin-based resin (B2) is more preferably 40% to 50%. In a case where the isotactic pentad fraction [mmmm] of the second α-olefin-based resin (B2) is more than 60%, there is a possibility that the molding processability of the thermoplastic resin composition may not be sufficient. In a case where the isotactic pentad fraction [mmmm] of the second α-olefin-based resin (B2) is less than 30%, there is a possibility that the durability may be deteriorated.

A melting point Tm_{B2} of the second α-olefin-based resin (B2) is 60°C to 100°C and preferably 70°C to 90°C. In a case where the melting point Tm_{B2} of the second α-olefin-based resin (B2) is lower than 60°C, there is a possibility that the durability of a molded body of the thermoplastic resin composition may be deteriorated. In addition, in a case where the melting point Tm_{B2} of the second α-olefin-based resin (B2) is 100°C or lower, the effect of lowering the molding temperature by including (B2) second α-olefin-based resin can be sufficiently obtained.

As the second α-olefin-based resin (B2), a known α-olefin having an isotactic pentad fraction [mmmm] in the above range and a melting point Tm_{B2} in the above range can be used. An α-olefin-based thermoplastic resin obtained by polymerizing one or more monomers selected from α-olefins having 3 to 5 carbon atoms is preferably used.

Examples of the α-olefins having 3 to 5 carbon atoms include propylene, 1-butene, and 1-pentene. Among these, an α-olefin having 3 or 4 carbon atoms (propylene or 1-butene) is preferable and an α-olefin having 3 carbon atoms (propylene) is more preferable.

As the second α-olefin-based resin (B2), among these monomers, an α-olefin-based homopolymer obtained by polymerizing one monomer alone may be used and an α-olefin-based copolymer obtained by copolymerizing two or more monomers in combination may be used. In addition, an α-olefin-based copolymer including a monomer unit derived from ethylene, which is generated by using ethylene as a part of the monomer, may be used.

For the second α-olefin-based resin (B2), it is preferable to contain a monomer unit derived from propylene.

The thermoplastic resin composition of the embodiment includes 50% to 90% by mass of the powder material (A), and 50% to 10% by mass of the α-olefin-based thermoplastic resin (B). The content of the powder material (A) in the thermoplastic resin composition is preferably 60% to 85% by mass (the content of the α-olefin-based thermoplastic resin (B) is 40% to 15% by mass), and more preferably 70% to 85% by mass (the content of the α-olefin-based thermoplastic resin (B) is 30% to 15% by mass). In the embodiment, since the content of the powder material (A) is 50% by mass or more, by molding thermoplastic resin composition, a molded body having a sufficient function obtained by including the powder material is obtained. Since the content of the powder material (A) is 90% by mass or less, the viscosity of the thermoplastic resin composition at the time of melting does not become too high and good molding processability can be obtained.

In the thermoplastic resin composition of the embodiment, the mass ratio ((B2)/(B1)) of the second α-olefin-based resin (B2) relative to the first α-olefin-based resin (B1) is 0.3 to 2.0. The mass ratio (B2)/(B1) is preferably 0.5 to 1.8 and more preferably 0.8 to 1.5. In a case where the mass ratio (B2)/(B1) is less than 0.3, when a molded body of the thermoplastic resin composition is molded, cracking and chipping easily occur, resulting in insufficient molding processability. In addition, when a mass ratio (B2)/(B1) is more than 2.0, in a case where a molded body of the thermoplastic resin composition is produced using a mold, it becomes difficult to release the molded body from the mold.

In the thermoplastic resin composition of the embodiment, the blending ratio of the powder material (A), the first α-olefin-based resin (B1), and the second α-olefin-based resin (B2) can be determined according to the application of the thermoplastic resin composition within a range that satisfies the above ratio. By changing the blending ratio of the respective components (A), (B1), and (B2), it is possible to change the properties of the molded body such as a function obtained by including the powder material (in a case where the powder material is a carbonaceous material, conductivity, thermal conductivity, or the like), bending strength, and durability.

### [Other Components]

The thermoplastic resin composition of the embodiment may include other components, in addition to the powder material (A) and the α-olefin-based thermoplastic resin (B), if required, for the purpose of improving moldability, durability, weather resistance, water resistance, and the like. Examples of other components include an ultraviolet stabilizer, an antioxidant, a mold-releasing agent, a water repellent agent, a thickener, a low-shrinkage agent, and a hydrophilicizing agent.

The blending amount of these other components is preferably 5 parts by mass or less in total with respect to a total of 100 parts by mass of the powder material (A) and the α-olefin-based thermoplastic resin (B).

### [Method for Producing Thermoplastic Resin Composition]

In order to produce the thermoplastic resin composition of the embodiment, the powder material (A) and the α-olefin-based thermoplastic resin (B) may be mixed. The mixing method is not particularly limited and for example, a mixer such as a roll mill, an extruder, a kneader, or a Banbury mixer can be used. It is preferable to mix the powder material (A) and the α-olefin-based thermoplastic resin (B) uniformly using these mixers.

### [Molded Body and Method for Producing Molded Body]

A molded body according to an embodiment is formed of the thermoplastic resin composition of the embodiment. The shape of the molded body of the embodiment is not particularly limited and for example, a sheet-like shape can be adopted.

Next, as a method for producing a molded body according to an embodiment, a case where a thin sheet-like molded body is produced will be described as an example.

In a case where a sheet-like molded body is produced, first, a composition sheet is formed from the thermoplastic resin composition. In the embodiment, before the composition sheet is formed, the thermoplastic resin composition may be pulverized or granulated. Thus, it is easy to supply the thermoplastic resin composition to a molding machine and a mold used for molding a composition sheet.

As a method for molding the composition sheet, a method using an extruder, a method using an extruder and a rolling roll in combination, a method for supplying the thermoplastic resin composition to a rolling roll, and the like may be used. It is preferable that the temperature of the rolling roll be equal to or lower than the melting point Tm_{B1} of the first α-olefin-based thermoplastic resin (B1) (binder component) in the thermoplastic resin composition, and preferably a temperature in a range of 10°C to 20°C lower than the melting point Tm_{B1}.

Next, the composition sheet is subjected to compression molding. A compression molding method is not particularly limited and for example, a method including supplying the composition sheet to a mold, placing the mold on a press plate heated to a compression molding temperature, and heating and compression-molding at a predetermined compression molding temperature for a predetermined period of time may be used. As heating means, electricity, induction heating, infrared rays, a heat medium, and the like may be used. In addition, after a releasing agent is applied to the mold, the composition sheet may be charged, heated, and compression-molded.

In the embodiment, the compression molding temperature is preferably set to a temperature 10°C to 20°C higher than the melting point Tm_{B1} of the first α-olefin-based thermoplastic resin (B1). Thus, the thermoplastic resin composition is shaped (heated and compression-molded) into a predetermined shape. In a case where the compression molding temperature is higher than the melting point Tm_{B1} by 20°C, the time and effort are required for heating and cooling with the compression molding, and molding cycle properties are not sufficient. In a case where a temperature difference between the compression molding temperature higher than the melting point Tm_{B1} and the melting point Tm_{B1} is set to less than 10°C, there is a possibility that the molding processability may not be sufficient.

Subsequently, cooling water is allowed to flow to the press plate and the mold is subjected to pressure cooling to a temperature lower than 50°C. In a case where the temperature at which the mold is subjected to compression cooling is 50°C or higher, there is a possibility that the molding processability may not be sufficient. The compression cooling is preferably carried out continuously while keeping the mold used for compression molding closed, that is, keeping the pressurized state, and it is preferable that the pressurization at the time of compression cooling is greater than or equal to the pressurization at the time of compression molding. In a case where the pressurization at the time of compression cooling is smaller than the pressurization at the time of compression molding, a large amount of the powder material (A) is included in the thermoplastic resin composition to be compressed and thus there is a possibility that spring back may occur (there is a possibility that a force to rebound back may be applied). As a result, there is a concern of a decrease in conductivity and mechanical properties due to a decrease in the density of the molded body. After the compression cooling, the mold is opened and the molded body is taken out. Through the above steps, a sheet-like molded body can be obtained.

In the method for producing a molded body of the embodiment, in a case in which compression-molding is performed for the composition sheet using a pair of molds which includes one mold having a plurality of protruding portions extending in one direction at a predetermined pitch and the other mold having a plurality of recessed portions provided at the positions corresponding to the plurality of protruding portions to be fitted to the protruding portions, a corrugated shaped molded body having a plurality of grooves of a predetermined depth formed at a predetermined pitch can be obtained. In a case where a molded body having such a shape is formed using the thermoplastic resin composition in which a powder material is the above carbonaceous material, a molded body that can be suitably used for a bipolar plate for a redox flow cell and a separator for a fuel cell can be obtained.

The method for producing a molded body of the present invention is not limited to the above method. For example, a molded body may be produced by heating and press-shaping the thermoplastic resin composition using a hot press molding machine and then press-cooling using a cooling pressing machine. In this case, it is possible to shorten the molding cycle by arranging several press machines as required and dividing the step.

### [Bipolar Plate for Redox Flow Cell and Separator for Fuel Cell]

A bipolar plate for a redox flow cell according to an embodiment is a molded body of the above thermoplastic resin composition in which the powder material included is the carbonaceous material.

A separator for a fuel cell according to an embodiment is a molded body of the above thermoplastic resin composition in which the powder material included is the carbonaceous material.

Such a molded body has good conductivity since a carbonaceous material is sufficiently included in the thermoplastic resin composition as the powder material. In addition, since the molding processability of the thermoplastic resin composition is good, a molded body having desired dimensional accuracy can be easily obtained and the molded body can be efficiently formed. Thus, the molded body in which the powder material included in the above thermoplastic resin composition is the carbonaceous material is suitable for a bipolar plate for a redox flow cell and a separator for a fuel cell.

### EXAMPLES

Hereinafter, the present invention will be described in more detail with reference to Examples and Comparative Examples, but the present invention is not limited to only the following Examples.

By the method shown below, thermoplastic resin compositions of Examples 1 to 5 and Comparative Examples 1 to 8 including the following respective components (A), (B1), and (B2) at ratios shown in Tables 1 and 2 were produced. Each of the obtained thermoplastic resin compositions was used to produce molded bodies of Examples 1 to 5 and Comparative Examples 1 to 8 by the method shown below. In addition, by the method shown below, the molding processability of the thermoplastic resin compositions was evaluated.

**Table 1**

| | | Unit | Example 1 | Example 2 | Example 3 | Example 4 | Example 5 |
|---|---|---|---|---|---|---|---|
| (A) | | [% by mass] | 50 | 50 | 50 | 80 | 80 |
| (B1) | B1-1 | [% by mass] | 37.5 | | 16.7 | 15.0 | 6.7 |
| | B1-2 | [% by mass] | | 37.5 | | | |
| (B2) | B2-1 | [% by mass] | 12.5 | 12.5 | 33.3 | 5.0 | 13.3 |
| | B2-2 | [% by mass] | | | | | |
| Total | | [% by mass] | 100 | 100 | 100 | 100 | 100 |
| (B2)/(B1) | | [-] | 0.33 | 0.33 | 2.0 | 0.33 | 2.0 |
| (B1) Melting point Tm_{B1} | | [°C] | 160 | 120 | 160 | 160 | 160 |
| (B2) Melting point Tm_{B2} | | [°C] | 80 | 80 | 80 | 80 | 80 |
| (B1) [mmmm] | | [%] | 95 | 70 | 95 | 95 | 95 |
| (B2) [mmmm] | | [%] | 50 | 50 | 50 | 50 | 50 |
| Compression molding temperature | | [°C] | 180 | 140 | 180 | 180 | 180 |
| Difference between compression molding temperature and (B1) melting point Tm_{B1} | | [°C] | 20 | 20 | 20 | 20 | 20 |
| Moldability | | - | ○ | ○ | ○ | ○ | ○ |
| Releasability | | - | ○ | ○ | ○ | ○ | ○ |
| Production efficiency | | - | ○ | ○ | ○ | ○ | ○ |

**Table 2**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| (A) | | [% by mass] | 50 | 50 | 50 | 50 | 50 | 80 | 80 | 50 | 50 | 50 |
| (B1) | B1-1 | [% by mass] | 45 | 10 | | 45 | | 18 | 4.0 | 37.5 | 50 | |
| | B1-2 | [% by mass] | | | 45 | | 45 | | | | | |
| (B2) | B2-1 | [% by mass] | 5.0 | 40 | 5.0 | 5.0 | 5.0 | 2.0 | 16 | | | 50 |
| | B2-2 | [% by mass] | | | | | | | | 12.5 | | |
| Total | | [% by mass] | 100 | 100 | 100 | 100 | 100 | 100 | 100 | 100 | 100 | 100 |
| (B2)/(B1) | | [-] | 0.11 | 4.0 | 0.11 | 0.11 | 0.11 | 0.11 | 4.0 | 0.33 | | |
| (B1) Melting point Tm_{B1} | | [°C] | 160 | 160 | 120 | 160 | 120 | 160 | 160 | 160 | 160 | |
| (B2) Melting point Tm_{B2} | | [°C] | 80 | 80 | 80 | 80 | 80 | 80 | 80 | 80 | | 80 |
| (B1) [mmmm] | | [%] | 95 | 95 | 70 | 95 | 70 | 95 | 95 | 95 | 95 | |
| (B2) [mmmm] | | [%] | 50 | 50 | 50 | 50 | 50 | 50 | 50 | 5 | | 50 |
| Compression molding temperature | | [°C] | 180 | 180 | 140 | 220 | 180 | 180 | 180 | 180 | 180 | 100 |
| Difference between compression molding temperature and (B1) melting point Tm_{B1} | | [°C] | 20 | 20 | 20 | 60 | 60 | 20 | 20 | 20 | 20 | 20 |
| Moldability | | - | × | ○ | × | ○ | ○ | × | ○ | × | × | ○ |
| Releasability | | - | ○ | × | ○ | ○ | ○ | ○ | × | ○ | ○ | × |
| Production efficiency | | - | ○ | ○ | ○ | × | × | ○ | ○ | ○ | × | ○ |

The respective components (A), (B1), and (B2) shown in Tables 1 and 2 are as follows.

### [Powder Material (A)]

Powder obtained by pulverizing "SHOCARAISER™ S", artificial graphite powder, manufactured by Showa Denko KK (75% on 80# (when the powder is provided on an 80-mesh sieve [mesh opening: 180 µm] to pass through the sieve, the over sieve portion thereof is 75% by mass)) using a known pulverizer to have a volume-average particle diameter (D50) of 40 µm.

### [α-Olefin-Based Thermoplastic Resin (B)]

(B1): First α-Olefin-Based Resin
   (B1-1): "VS200A" manufactured by SunAllomer Ltd. (polypropylene, melting point: 160°C, isotactic pentad fraction [mmmm]: 95%)
   (B1-2): "PB222A" manufactured by SunAllomer Ltd. (polypropylene, melting point: 120°C, isotactic pentad fraction [mmmm]: 70%)
(B2): Second α-Olefin-Based Resin
   (B2-1): "L-MODU (registered trademark) S400" manufactured by Idemitsu Kosan Co., Ltd (polypropylene, melting point: 80°C, isotactic pentad fraction [mmmm]: 50%)
   (B2-2): "Licocene (registered trademark) PP1302" manufactured by Clariant (Japan) K.K. (polypropylene, melting point: 90°C, isotactic pentad fraction [mmmm]: 5%)

The isotactic pentad fractions [mmmm] of the first α-olefin-based resin (B1) and the second α-olefin-based resin (B2) were obtained using the following apparatus under the following conditions.
Apparatus: JNM-EX400 type NMR apparatus manufactured by JEOL Ltd.
Sample concentration: 220 mg/ 3 ml of NMR solvent:
NMR solvent: 1,2,4-trichlorobenzene/hexadeuterobenzene (90/10 vol%)
Measurement temperature: 130°C
Pulse width: 45°
Pulse repetition time: 10 seconds
Integration times: 4000 times

The isotactic pentad fraction [mmmm] in Tables 1 and 2 means a proportion (%) of a structural unit having a meso structure (an mmmm structure with all five methyl groups therein being aligned in the same direction) in five propylene structural units based on assignment of the peaks appearing in the ¹³C-NMR spectrum described in Cheng H. N., Ewen J. A., Makromol. cem., 1989, 190, 1931. (B1-2) is a block copolymer of propylene and ethylene and it is determined that a structural unit which contains an ethylene unit in five structural units is not a meso structure.

### [Evaluation Method of Molding Processability (Moldability and Releasability)]

### (Evaluation Method of Moldability)

The external appearance and the dimension of the molded body of the thermoplastic resin composition released from the mold were evaluated based on the standards shown below.

### "Standards"

○ (allowable): The height of the protruding portion in the molded body of the thermoplastic resin composition is within ± 10% as compared with the value of the mold protruding portion height.
× (not allowable): The height of the protruding portion in the molded body of the thermoplastic resin composition is not within ± 10% as compared with the value of the mold protruding portion height.

### (Evaluation Method of Releasability)

The released state in a case where the molded body of the thermoplastic resin composition was released from the mold was evaluated based on the standards shown below.

### "Standards"

○ (allowable): In a case where the molded body of the thermoplastic resin composition was released from the mold, cracking and chipping did not occur in the molded body.
× (not allowable): In a case where the molded body of the thermoplastic resin composition was released from the mold, cracking and chipping occurred in the molded body.

### (Evaluation Method of Production Efficiency)

○ (allowable): The pressing (compression molding + compression cooling) time required for shaping is within 10 minutes.
× (not allowable): The pressing (compression molding + compression cooling) time required for shaping is longer than 10 minutes.

### (Example 1)

The components (A), (B1), and (B2) were put into a twin-screw kneader (KTX 30, screw diameter: 30 mm, L/D: 30) manufactured by Kobe Steel, Ltd. at the ratio shown in Table 1, and kneaded at a screw rotation speed of 50 rpm and a kneading temperature of 250°C to obtain a thermoplastic resin composition.

The obtained thermoplastic resin composition was extruded using a single-screw extruder (TMNH65SS-20) manufactured by TOMI MACHINERY Co., Ltd. at a screw rotation speed of 20 rpm and a kneading temperature of 220°C. A sheet takeout die having a width of 92 mm and a thickness of 5 mm was attached to the outlet of the single-screw extruder to mold a thermoplastic resin composition into a sheet shape thermoplastic resin composition. Thus, a composition sheet formed of the thermoplastic resin composition was obtained.

The obtained composition sheet was put into a mold having a groove pattern with a length of 100 mm, a width of 100 mm, a pitch interval of 1.5 mm, and a depth of 5 mm and compression molding was carried out for 120 seconds at the compression molding temperature shown in Table 1 using a heating and cooling type compression molding machine (MHPC-V-450-450-1-50) manufactured by MEIKI Co., Ltd. As a result, the thermoplastic resin composition was shaped (heated and compression-molded) into a sheet-like corrugated shape having a plurality of grooves having a pitch interval of 1.5 mm and a depth of 5 mm. Thereafter, the mold was subjected to compression cooling to a temperature lower than 50°C and the mold was opened to take out the molded body. Thus, a sheet-like molded body of Example 1 was obtained. The compression molding temperature was set to 180°C, which is a temperature 20°C higher than the melting point Tm_{B1} of the first α-olefin-based resin (B1).

The molded body of Example 1 includes 50% by mass of the powder material (A), 37.5% by mass of the first α-olefin-based resin (B1-1), and 12.5% by mass of the second α-olefin-based resin (B2-1), which is 0.33 times the amount of the first α-olefin-based resin (B1-1), as shown in Table 1.

### (Example 2)

A molded body of Example 2 was obtained in the same manner as in Example 1 except that the components (A), (B1), and (B2) were used at the ratio shown in Table 1. The compression molding temperature was set to 140°C, which is a temperature 20°C higher than the melting point Tm_{B1} of the first α-olefin-based resin (B1).

The molded body of Example 2 includes 50% by mass of the powder material (A), 37.5% by mass of the first α-olefin-based resin (B1-1), and 12.5% by mass of the second α-olefin-based resin (B2-1), which is 0.33 times the amount of the first α-olefin-based resin (B1-1), as shown in Table 1.

### (Example 3)

A molded body of Example 3 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Example 3 includes 50% by mass of the powder material (A), 16.7% by mass of the first α-olefin-based resin (B1-1), and 33.3% by mass of the second α-olefin-based resin (B2-1), which is 2.0 times the amount of the first α-olefin-based resin (B1-1), as shown in Table 1.

### (Example 4)

A molded body of Example 4 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Example 4 includes 80% by mass of the powder material (A), 15.0% by mass of the first α-olefin-based resin (B1-1), and 5.0% by mass of the second α-olefin-based resin (B2-1), which is 0.33 times the amount of the first α-olefin-based resin (B1-1), as shown in Table 1.

### (Example 5)

A molded body of Example 5 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Example 5 includes 80% by mass of the powder material (A), 6.7% by mass of the first α-olefin-based resin (B1-1), and 13.3% by mass of the second α-olefin-based resin (B2-1), which is 2.0 times the amount of the first α-olefin-based resin (B1-1), as shown in Table 1.

As shown in Table 1, the evaluation of the moldability, the releasability, and the production efficiency of all of the thermoplastic resin compositions of Examples 1 to 5 were ○ (allowable) and the thermoplastic resin compositions had good molding processability.

### (Comparative Example 1)

A molded body of Comparative Example 1 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Comparative Example 1 includes 50% by mass of the powder material (A), 45% by mass of the first α-olefin-based resin (B1-1), and 5.0% by mass of the second α-olefin-based resin (B2-1), which is 0.11 times the amount of the first α-olefin-based resin (B1-1), as shown in Table 2.

The evaluation of the releasability and the production efficiency of the thermoplastic resin composition of Comparative Example 1 was ○ (allowable). However, since the mass ratio ((B2)/(B1)) of the second α-olefin-based resin (B2) relative to the first α-olefin-based resin (B1) was less than 0.3, cracking occurred in the grooves, and the evaluation of the moldability was × (not allowable).

### (Comparative Example 2)

A molded body of Comparative Example 2 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Comparative Example 2 includes 50% by mass of the powder material (A), 10% by mass of the first α-olefin-based resin (B1-1), and 40% by mass of the second α-olefin-based resin (B2-1), which is 4.0 times the amount of the first α-olefin-based resin (B1-1), as shown in Table 2.

The evaluation of the moldability and the production efficiency of the thermoplastic resin composition of Comparative Example 2 was ○ (allowable). However, since the mass ratio ((B2)/(B1)) of the second α-olefin-based resin (B2) relative to the first α-olefin-based resin (B1) was more than 2.0, it was difficult to release the molded body from the mold and the evaluation of the releasability was × (not allowable).

### (Comparative Example 3)

A molded body of Comparative Example 3 was obtained in the same manner as in Example 1 except that the components (A), (B1), and (B2) were used at the ratio shown in Table 1. The compression molding temperature was set to 140°C, which is a temperature 20°C higher than the melting point Tm_{B1} of the first α-olefin-based resin (B1).

The molded body of Comparative Example 3 includes 50% by mass of the powder material (A), 45% by mass of the first α-olefin-based resin (B1-1), and 5.0% by mass of the second α-olefin-based resin (B2-1), which is 0.11 times the amount of the first α-olefin-based resin (B1-2), as shown in Table 2.

The evaluation of the releasability and the production efficiency of the thermoplastic resin composition of Comparative Example 3 was ○ (allowable). However, since the mass ratio ((B2)/(B1)) of the second α-olefin-based resin (B2) relative to the first α-olefin-based resin (B1) was less than 0.3, cracking occurred in the grooves, and the evaluation of the moldability was × (not allowable).

### (Comparative Example 4)

A molded body of Comparative Example 4 was obtained in the same manner as in Example 1 except that the components (A), (B1), and (B2) were used at the ratio shown in Table 1. The compression molding temperature was set to 220°C, which is a temperature 60°C higher than the melting point Tm_{B1} of the first α-olefin-based resin (B1).

The components of the molded body in Comparative Example 4 are the same as those in Comparative Example 1 as shown in Table 2.

In Comparative Example 4, as shown in Table 2, the evaluation of the moldability and the releasability was ○ (allowable). This is because the compression molding temperature was increased at the sacrifice of the molding cycle properties in order to secure the molding processability of the thermoplastic resin composition. That is, in the use and molding conditions of the thermoplastic resin composition in Comparative Example 4, the production efficiency is low.

### (Comparative Example 5)

A molded body of Comparative Example 5 was obtained in the same manner as in Example 1 except that the components (A), (B1), and (B2) were used at the ratio shown in Table 1. The compression molding temperature was set to 180°C, which is a temperature 60°C higher than the melting point Tm_{B1} of the first α-olefin-based resin (B1).

The components of the molded body in Comparative Example 5 are the same as those in Comparative Example 3 as shown in Table 2.

In Comparative Example 5, as shown in Table 2, the evaluation of the moldability and the releasability was ○ (allowable). This is because the compression molding temperature was increased at the sacrifice of the molding cycle properties in order to secure the molding processability of the thermoplastic resin composition. That is, in the use and molding conditions of the thermoplastic resin composition in Comparative Example 5, the production efficiency is low.

### (Comparative Example 6)

A molded body of Comparative Example 6 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Comparative Example 6 includes 80% by mass of the powder material (A), 18% by mass of the first α-olefin-based resin (B1-1), and 2.0% by mass of the second α-olefin-based resin (B2-1), which is 0.11 times the amount of the first α-olefin-based resin (B1-1), as shown in Table 2.

The evaluation of the releasability and the production efficiency of the thermoplastic resin composition of Comparative Example 6 was ○ (allowable). However, since the mass ratio ((B2)/(B1)) of the second α-olefin-based resin (B2) relative to the first α-olefin-based resin (B1) was less than 0.3, cracking occurred in the grooves, and the evaluation of the moldability was × (not allowable).

### (Comparative Example 7)

A molded body of Comparative Example 7 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Comparative Example 7 includes 80% by mass of the powder material (A), 4.0% by mass of the first α-olefin-based resin (B1-1), and 16% by mass of the second α-olefin-based resin (B2-1), which is 4.0 times the amount of the first α-olefin-based resin (B1-1), as shown in Table 2.

The evaluation of the moldability and the production efficiency of the thermoplastic resin composition of Comparative Example 7 was ○ (allowable). However, since the mass ratio ((B2)/(B1)) of the second α-olefin-based resin (B2) relative to the first α-olefin-based resin (B1) was more than 2.0, it was difficult to release the molded body from the mold and the evaluation of the releasability was × (not allowable).

### (Comparative Example 8)

A molded body of Comparative Example 7 was obtained in the same manner as in Example 1 except that the components (A), (B1), and (B2) were used at the ratio shown in Table 1. The compression molding temperature was set to 180°C, which is a temperature 20°C higher than the melting point Tm_{B1} of the first α-olefin-based resin (B1).

The molded body of Comparative Example 8 includes 50% by mass of the powder material (A), 37.5% by mass of the first α-olefin-based resin (B1-1), and 12.5% by mass of the second α-olefin-based resin (B2-2), which is 0.33 times the amount of the first α-olefin-based resin (B1-1), as shown in Table 2.

The evaluation of the releasability and the production efficiency of the thermoplastic resin composition of Comparative Example 8 was ○ (allowable). However, since the (B2) isotactic pentad fraction [mmmm] of the second α-olefin-based resin (B2) was less than 30%, cracking occurred in the grooves, and the evaluation of the moldability was × (not allowable).

### (Comparative Example 9)

A molded body of Comparative Example 9 was obtained in the same manner as in Example 1 except that only the components (A) and (B1) were used at the ratio shown in Table 1. The compression molding temperature was set to 180°C, which is a temperature 20°C higher than the melting point Tm_{B1} of the first α-olefin-based resin (B1).

The molded body of Comparative Example 9 includes 50% by mass of the powder material (A), and 50% by mass of the first α-olefin-based resin (B1-1), and does not include the second α-olefin-based resin (B2), as shown in Table 2.

The evaluation of the releasability and the production efficiency of the thermoplastic resin composition of Comparative Example 9 was ○ (allowable). However, since the component (B2) was not included, the evaluation of the moldability was × (not allowable).

### (Comparative Example 10)

A molded body of Comparative Example 10 was obtained in the same manner as in Example 1 except that only the components (A) and (B2-1) were used at the ratio shown in Table 1. The compression molding temperature was set to 100°C, which is a temperature 20°C higher than the melting point Tm_{B2} of the second α-olefin-based resin (B2).

The molded body of Comparative Example 10 includes 50% by mass of the powder material (A), and 50% by mass of the second α-olefin-based resin (B2-1), and does not include the first α-olefin-based resin (B1), as shown in Table 2.

The evaluation of the moldability and the production efficiency of the thermoplastic resin composition of Comparative Example 10 was ○ (allowable). However, since the component (B1) was not included, the evaluation of the releasability was × (not allowable).

### Industrial Applicability

A thermoplastic resin composition containing a sufficient amount of powder material and capable of obtaining good molding processability is provided. Especially, in a case where a carbonaceous material is used as the powder material, a molded body having good conductivity can be obtained and thus the composition is suitably used as a molding material for a bipolar plate for a redox flow cell and a separator for a fuel cell.

## Claims

1. A thermoplastic resin composition, comprising:
50% to 90% by mass of a powder material (A); and
50% to 10% by mass of a α-olefin-based thermoplastic resin (B),
wherein the α-olefin-based thermoplastic resin (B) includes
a first α-olefin-based thermoplastic resin (B1) having an isotactic pentad fraction [mmmm] of 70% to 99% and a melting point in a range of 120°C to 168°C, and
a second α-olefin-based thermoplastic resin (B2) having an isotactic pentad fraction [mmmm] of 30% to 60% and a melting point in a range of 60°C to 100°C, and
a mass ratio ((B2)/(B1)) of the second α-olefin-based thermoplastic resin (B2) relative to the first α-olefin-based thermoplastic resin (B1) is 0.3 to 2.0.

2. The thermoplastic resin composition according to Claim 1,
wherein the powder material (A) is at least one carbonaceous material selected from carbon black, carbon fiber, amorphous carbon, expanded graphite, artificial graphite, natural graphite, kish graphite, vapor grown carbon fiber, carbon nanotube, and fullerene.

3. The thermoplastic resin composition according to Claim 1 or 2,
wherein each of the first α-olefin-based thermoplastic resin (B1) and the second α-olefin-based thermoplastic resin (B2) is an α-olefin-based thermoplastic resin formed by polymerizing one or more monomers selected from α-olefins having 3 to 6 carbon atoms.

4. The thermoplastic resin composition according to Claim 3,
wherein each of the first α-olefin-based thermoplastic resin (B1) and the second α-olefin-based thermoplastic resin (B2) includes a monomer unit derived from propylene.

5. A molded body, which is formed of the thermoplastic resin composition according to any one of Claims 1 to 4.

6. A bipolar plate for a redox flow cell which is a molded body of the thermoplastic resin composition according to any one of Claims 2 to 4.

7. A separator for a fuel cell which is a molded body of the thermoplastic resin composition according to any one of Claims 2 to 4.

8. A method for producing a molded body, comprising:
a step of supplying the thermoplastic resin composition according to any one of Claims 1 to 4 into a mold and performing heating and compression molding at a compression molding temperature which is 10°C to 20°C higher than the melting point of the first α-olefin-based thermoplastic resin (B1); and
a step of subjecting the mold to compression cooling to a temperature lower than 50°C.
